# DEMANDE DE BREVET EUROPEEN

(11) **EP 1 995 450 A2**
(43) Date de publication de la demande: **26.11.2008**
(21) Numéro de dépôt: 08156227.4
(22) Date de dépôt: 15.05.2008
(51) Int. Cl.: F02N 11/08

(54) **Procédé de commande de l'arrêt et du redémarrage automatique du moteur d'un véhicule**

(30) Priorité: 23.05.2007 FR 0755209
(71) Demandeur: Peugeot Citroën Automobiles SA, 78943 Vélizy-Villacoublay Cedex (FR)
(72) Inventeur: Mathieu, Boris, 75015, Paris (FR); Mercier-Calvairac, Fabien, 75010, Paris (FR)
(74) Mandataire: Ménès, Catherine

(57) **Abrégé**

L'invention concerne un procédé de commande de l'arrêt et du redémarrage automatique du moteur thermique d'un véhicule automobile muni d'une boite de vitesse mécanique, en fonction de conditions de conduite du véhicule.

Selon l'invention, l'arrêt ou le redémarrage du moteur est commandé si certaines conditions sont réalisées, ces conditions correspondant aux positions de la pédale d'embrayage, de la pédale de frein, du levier de changement de vitesses et de la vitesse du véhicule par rapport à certains seuils de vitesse prédéterminés.

## Description

La présente invention concerne un procédé de commande de l'arrêt et du redémarrage automatique du moteur thermique d'un véhicule automobile muni d'une boite de vitesse mécanique. Le véhicule peut être équipé d'un seul moteur, un moteur thermique, ou de deux moteurs, l'un thermique et l'autre électrique dans le cas d'un véhicule hybride.

Par boite de vitesses mécanique, on entend une boite de vitesses actionnée à l'aide d'une pédale d'embrayage et d'un levier de changement de rapport.

Afin de réduire la consommation en carburant et la pollution des véhicules automobiles, des systèmes de mise en marche et d'arrêt automatique du moteur thermique ont été conçus et commercialisés pour permettre l'arrêt du moteur thermique lorsqu'il n'est pas utilisé, par exemple lors des phases de ralenti et plus particulièrement lorsque le véhicule est arrêté à un feu rouge. Ces systèmes sont habituellement désignés par l'appellation « Stop & Start » ou par son abréviation S&S.

Différents systèmes ont déjà été proposés. Ainsi, la demande de brevet GB 2413999 décrit un système S&S qui fait dépendre l'arrêt et le redémarrage du moteur de certaines situations de conduite, telles que la vitesse du véhicule et l'actionnement, ou non, de l'embrayage ou de la pédale de frein. Le brevet EP 1 028 022 concerne un système S&S pour lequel l'arrêt du moteur est décidé lorsque la pédale de frein est enfoncée et lorsqu'une période de temps prédéterminée s'est écoulée à partir du moment où la vitesse du véhicule devient inférieure ou égale à une vitesse d'arrêt prédéterminée. Le brevet EP 1 302 359 B1 décrit un système S&S commandant l'arrêt du moteur lorsque les freins du véhicule sont actionnés de manière répétée à de courts intervalles de temps en alternance avec la pédale de gaz et lorsque la vitesse du véhicule est inférieure à une valeur de seuil lors de l'actionnement des freins. Enfin, le brevet EP 1 077 149 B1 tente de résoudre le problème de l'arrêt inopiné du moteur (le moteur cale) dans un système S&S.

La présente invention propose un procédé qui améliore les performances d'un système S&S en détectant mieux la volonté du conducteur d'arrêter et de redémarrer le moteur thermique de son véhicule. Le conducteur s'adapte ainsi mieux au système S&S, lequel devient plus intuitif pour le conducteur.

De façon plus précise l'invention concerne un procédé de commande de l'arrêt automatique du moteur thermique d'un véhicule automobile muni d'une boite de vitesse mécanique, en fonction de conditions de conduite du véhicule. Selon l'invention, l'arrêt du moteur est commandé si les conditions de l'un des ensembles suivants de conditions sont réalisées :

*Premier ensemble :
■ la pédale d'embrayage est relâchée,
■ la boite de vitesse est au point mort, et
■ la vitesse du véhicule est inférieure à un seuil de vitesse v1 prédéterminé ;

*Deuxième ensemble :
■ la pédale d'embrayage est enfoncée,
■ la pédale de frein est enfoncée, et
■ la vitesse du véhicule est inférieure à un seuil de vitesse v2 prédéterminé.

Par point mort faux, il est entendu toute position dans laquelle le levier de vitesse n'est pas au point mort, soit qu'une vitesse soit effectivement engagée, soit qu'elle soit en cours d'engagement, comme c'est par exemple le cas lorsque le conducteur manipule son levier de vitesse

De préférence, le seuil de vitesse v1 est compris entre 20 et 35 km/h, par exemple de l'ordre de 30 km/h et le seuil de vitesse v2, est compris entre 5 et 25km/h, de préférence de l'ordre de 10 km/h (à noter toutefois, que l'invention n'exclut pas l'hypothèse d'un seuil de vitesse v2 supérieur au seuil de vitesse v1).

L'invention concerne également un procédé de commande du redémarrage automatique du moteur thermique d'un véhicule automobile muni d'une boite de vitesse mécanique, en fonction de conditions de conduite du véhicule. Selon l'invention, le redémarrage du moteur est commandé si les conditions de l'un des ensembles suivants de conditions sont réalisées :
* Premier ensemble :
   ■ la pédale d'embrayage est enfoncée,
   ■ la boite de vitesse est au point mort faux, et
   ■ la pédale de frein est relâchée

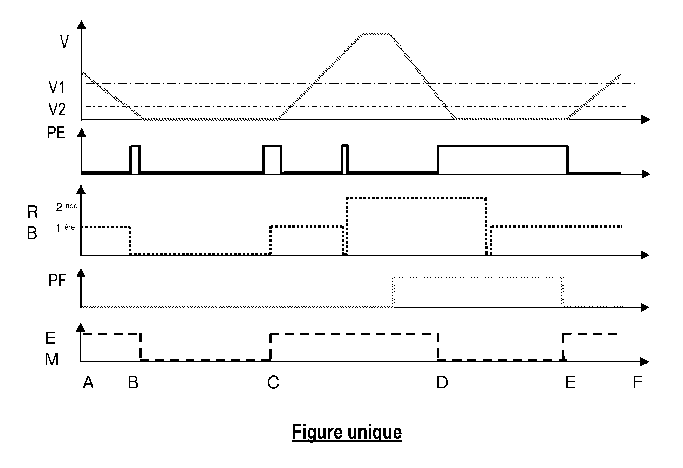

D'autres avantages et caractéristiques de l'invention apparaîtront au cours de la description qui suit, description faite en référence aux dessins annexés et sur lesquels la figure unique illustre le procédé de l'invention.

Selon l'invention, la stratégie d'arrêt et de redémarrage du moteur thermique est basée sur l'observation de la position de la pédale d'embrayage, du levier de changement de rapport de vitesse et de la pédale de frein. Les conditions d'arrêt du moteur thermique dépendent de la réalisation, ou de la non réalisation, d'un ensemble de conditions. Le moteur est automatiquement arrêté si les conditions suivantes sont réunies :
■ la pédale d'embrayage est relâchée,
■ le levier de la boite de vitesses est au point mort, et
■ la vitesse du véhicule est inférieure à un seuil de vitesse v1 prédéterminée, par exemple 30 km/h.

Le moteur peut aussi être arrêté si les conditions suivantes sont réunies :
■ la pédale d'embrayage est en position enfoncée,
■ la pédale de frein est en position enfoncée, et
■ la vitesse du véhicule est inférieure à un seuil de vitesse v2 prédéterminée, par exemple 10 km/h.

Le redémarrage du moteur est autorisé si les conditions suivantes sont réunies :
■ la pédale d'embrayage est enfoncée,
■ le levier de commande de la boite de vitesse est au point mort faux (c'est-à-dire que le levier n'est pas au point mort), et
■ la pédale de frein est relâchée.

Ces conditions sont montrées sur la figure unique qui illustre le procédé. L'état du moteur est représenté sur le graphe EM, les positions hautes représentées par les périodes AB, CD et EF, correspondent au moteur en marche et les positions basses BC et DE correspondent au moteur arrêté.

Au point B le graphe EM montre que le moteur est arrêté ce qui correspond aux conditions suivantes : le rapport de boite de vitesses RB est le point mort (le conducteur venant de passer du 1 er rapport au point mort), la pédale d'embrayage est relâchée (sur ce graphe PE, le niveau bas correspond à la pédale d'embrayage non appuyée alors que le niveau haut ou supérieur correspond à la pédale enfoncée) et la vitesse v du véhicule est inférieure à un seuil prédéterminé v1. Le moteur reste arrêté pendant toute la période BC, jusqu'au point C où il est remis automatiquement en marche du fait de la réalisation des conditions suivantes : le rapport de boite de vitesses RB est au point mort faux (le conducteur passant du point mort au 1 er rapport), la pédale de frein PF est relâchée (sur le graphe PF, le niveau inférieur correspond au non appuie de la pédale de frein et le niveau supérieur correspond à l'enfoncement de la pédale) et la pédale d'embrayage PE est enfoncée. Le moteur reste en marche pendant toute la période CD à la fin de laquelle il est arrêté puisque la pédale de frein PF est en position enfoncée, la pédale d'embrayage PE est aussi en position enfoncée et la vitesse du véhicule est inférieure à une valeur de seuil v2. Le moteur reste arrêté pendant toute la période DE et il redémarre automatiquement au point E puisque le rapport de boite de vitesse RB est au 1 er rapport (donc au point mort faux), la pédale d'embrayage PE est en position enfoncée et la pédale de frein PF est relâchée.

La vitesse du véhicule, les positions des pédales de frein et d'embrayage et la position du levier de boite de vitesses sont détectées de façon classique à l'aide de capteurs et la stratégie d'arrêt et de redémarrage du moteur thermique est mise en oeuvre à l'aide par exemple d'un microprocesseur qui peut être spécialement dédié. Tous ces moyens sont bien connus de l'homme du métier et sont décrits dans la demande de brevet FR 2 816 891 déposée au nom de la demanderesse et incorporée par référence à la présente description.

Le redémarrage du moteur thermique peut être assuré par tout moyen approprié tel par exemple qu'un démarreur classique ou un alternateur réversible.

Le procédé de la présente invention améliore le confort de conduite d'un véhicule muni d'un système S&S, en rendant son fonctionnement plus prévisible ou lisible par le conducteur. Le procédé permet également une diminution de la consommation du véhicule. Le gain de consommation est, par exemple, de 40 à 60% sur le cycle d'homologation du véhicule. Ce gain dépend du choix des seuils de vitesse V1 et V2 de coupure du moteur thermique.

## Revendications

1. Procédé de commande de l'arrêt automatique du moteur thermique d'un véhicule automobile muni d'une boite de vitesse mécanique, en fonction de conditions de conduite du véhicule **caractérisé en ce que** l'arrêt du moteur est commandé si les conditions de l'un des ensembles suivants de conditions sont réalisées :
* Premier ensemble :
■ la pédale d'embrayage PE est relâchée,
■ la boite de vitesse RB est au point mort, et
■ la vitesse v du véhicule est inférieure à un seuil de vitesse v1 prédéterminé ;
* Deuxième ensemble :
■ la pédale d'embrayage PE est enfoncée,
■ la pédale de frein PF est enfoncée, et
■ la vitesse v du véhicule est inférieure à un seuil de vitesse v2 prédéterminé.

2. Procédé selon la revendication 1 **caractérisé en ce que** le seuil de vitesse v1 est de l'ordre de 30 km/h.

3. Procédé selon la revendication 2 **caractérisé en ce que** le seuil de vitesse v2 est de l'ordre de 10 km/h.

4. Procédé de commande du redémarrage automatique du moteur thermique d'un véhicule automobile muni d'une boite de vitesse mécanique, en fonction de conditions de conduite du véhicule, **caractérisé en ce que** le redémarrage du moteur est commandé si les conditions suivantes sont réalisées :
■ la pédale d'embrayage est enfoncée,
■ la boite de vitesse est au point mort faux, et
■ la pédale de frein est relâchée
